# EUROPEAN PATENT APPLICATION

(11) **EP 0 651 544 A2**
(43) Date of publication of application: **03.05.1995**
(21) Application number: 94307982.2
(22) Date of filing: 28.10.1994
(51) Int. Cl.: H04M 1/00, H04M 1/274

(54) **Personal communicator having a touch sensitive contol panel**

(30) Priority: 01.11.1993 US 145914
(71) Applicant: International Business Machines Corporation, Armonk, N.Y. 10504 (US)
(72) Inventor: Allard, David Joseph, Boynton Beach, Florida 33436 (US); Canova, Francis James, Jr., Boynton Beach, Florida 33435 (US); Johnson, Debra Ann Gawne, Fort Lauderdale, Florida 33308 (US); Lanier, Charles Sterling, Delray Beach, Florida 33445 (US); Lewis, James Robert, Coconut Creek, Florida 33433 (US); Villafana, William, Davie, Florida 33328 (US); Wulf, James Christian, Boca Raton, Florida 33486 (US)
(74) Representative: Moss, Robert Douglas

(57) **Abstract**

A handheld, mobile personal communicator 10 has a user interface comprising a touchscreen display 28. The communicator 10 also has an editing function. In an editor mode, a first screen 150 is displayed containing a limited data entry area 152 and a full keyboard 156. By selecting a predetermined key, the screen is changed to second screen 160 having an enlarged data display area and a collapsed keyboard having a single line of keys. The first screen 150 can be restored by selecting a predetermined key. The enlarged data display area 162 shows more lines of text and allows a user to readily select different portions of the document being edited.

## Description

### Field of the Invention

The invention relates to the field of personal communicators having a variety of data processing and communications functions. More particularly, the invention relates to a collapsible keyboard for use with such a communicator.

### Background of the Invention

The invention was designed as part of a personal communicator that combines a cellular phone, a data and fax modem, and a data processing system, into a mobile, compact, lightweight, battery operated, handheld device having a variety of data processing and communication functions. These functions include operating the device as a standard cellular phone; a calendar showing a list of things to do at various times; an address book for organizing names, addresses and phone numbers; a calculator; a note pad allowing text entry and editing; and a communication device for fax, E-mail, and various data bases and services.

The personal communicator is in the form of a handset having an earphone or speaker at one end, a microphone at the other end, and a small touchscreen display between the speaker and the microphone. The display has a touch or pressure sensitive overlay, and a fine pitch liquid crystal display (LCD) operated as a standard CGA display with a resolution of 640x200 pixels. The touchscreen display provides a graphic user interface, input/output device for a variety of functions or applications

It is common in the field of desktop personal computers to provide separate keyboards and displays by means of which the entire area of a display can be used to view forms and documents that are being edited. In that way, the user is able to see a relatively large amount of information at a given time and is able to rapidly browse through the document a page at a time. Many screens display twenty five lines of text with eighty characters per line. However, this is impossible to do in a handheld device having only a small display area and no separate keyboard.

U.S. patent 5,184,314- E.J. Kelly et al discloses a "MOBILE DATA PROCESSING AND COMMUNICATIONS SYSTEM WITH REMOVABLE PORTABLE COMPUTER" in which the portable computer has a touchscreen display of a size apparently greater than that of the personal communicator of the invention. A full keyboard can be simulated on the display along with a limited data entry area. The system also has an external keyboard converter having a cradle for receiving the portable computer. The keyboard converter also has an electromechanical full size keyboard. When the portable computer is placed in the cradle, the data entry area of the touchscreen display is expanded to be available for displaying information while allowing the external keyboard to enter information and browse, edit, etc. When the data area is so expanded, none of the keyboard is displayed on the portable computer display. As will be apparent from the description below, the invention differs in that no external second keyboard is needed to produce an expanded data display area, and the simulated full keyboard is collapsed to a single line of keys on the expanded data area to control browsing through the document and readily switching back to the full keyboard for further data entry.

### Disclosure of the Invention

The general problem which the invention addresses is that of managing the contents of a screen on a touchscreen display where the screen area is relatively small and a relatively large amount of information is displayed. More specifically, the invention deals with displaying a full "qwerty" keyboard along with a data entry area that can be expanded, while the keyboard is collapsed, to permit the user to see and access a greater amount of information for browsing and editing.

One of the objects of the invention is to provide a touchscreen display with an improved expandable/collapsible data display area and collapsible/expandable keyboard.

Another object of the invention is to provide a handheld mobile personal communicator having a touchscreen display operable as a user interface for editing and viewing documents, and wherein the display is managed to alternately display a first screen having a full keyboard and limited data display area, and a second screen having a collapsed keyboard and an expanded data display area.

A further object of the invention is to provide a personal communicator with a touchscreen display interface in which a user can rapidly alternate between screens having expanded/collapsed keyboard and data display area, wherein a line of information selected from an expanded data display area is automatically positioned at the line in which data can be entered, when the data area is collapsed.

Briefly, in accordance with the invention, a personal communicator has a user interface comprising a touchscreen display. The communicator also has an editing function. In the editor mode, a first editor screen is presented containing a data entry area and a full keyboard. By selecting a predetermined key, the screen is changed to second screen having an enlarged data display area and a single line of keys. The editor screen with full keyboard can be restored by pressing a predetermined key. The enlarged entry area shows more lines of text and allows a user to readily select different portions of the information being edited.

### Brief Description of the Drawings

The invention will now be described, by way of example only, with reference to the accompanying drawings in which:
Fig. 1 is a plan view of a personal communicator embodying the invention;
Fig. 2 is a longitudinal view through the personal communicator shown in Fig. 1, schematically illustrating various components;
Fig. 3 is a is a block diagram of electrical components of the personal communicator shown in Fig. 1;
Fig. 4 is a sequence of screens, beginning with when the personal communicator is first turned on, showing how to select an editor;
Fig. 5 is a sequence of screens, beginning with a full keyboard screen displayed by the editor selected as via the screens shown in Fig. 4, illustrating the collapsible keyboard of the invention; and
Fig. 6 is a flow chart illustrating a sequence of operations associated with the collapsible keyboard.

### Detailed Description of the Invention

### General System Organization

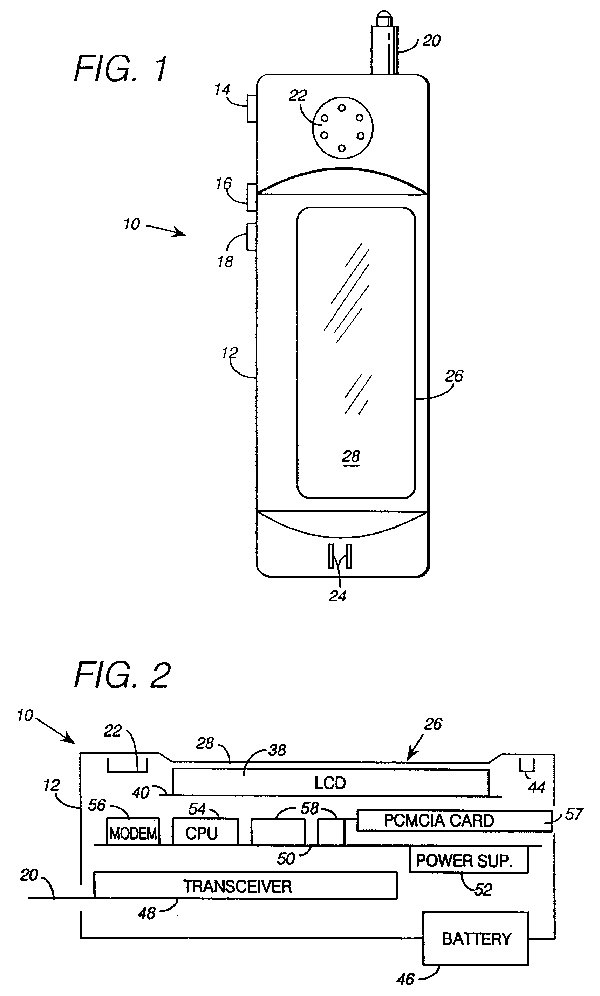

Referring now to the drawings, and first to Fig. 1, a personal communicator (PC) 10 is of the type generally set forth above and comprises a cellular phone and a complete data processing system further details of which are described below. PC 10 includes a housing or casing 12 having mounted along one side thereof a plurality of external, manually operated push buttons including an ON/OFF push button 14, an UP push button 16, and a DOWN push button 18. PC 10 has a size facilitating usage as a hand-held device and buttons 16 and 18 are located so that a right handed user can wrap his/her fingers around the rear of the casing and actuate the buttons to adjust speaker volume while the user is listening to the phone speaker. A pull-out antenna 20 is mounted at the top of the casing. A speaker 22 is mounted near the top of the casing and a microphone 44 (Fig. 2) is mounted inside the bottom of the casing behind port holes 24. A touchscreen display 26 is mounted on the middle portion of the casing between the speaker and the microphone, and provides an input/output (I/O) device and user interface for entering information into and receiving information, from the PC and the data processing system therein. The general shape of PC 10 is similar to the shape of commercially available portable phones except that display 26 occupies the space normally used for a standard, electromechanical, twelve push-buttons, phone keyboard. Display 26 includes a touch sensitive overlay 28 the outer surface of which is flush with adjacent portions of casing 12.

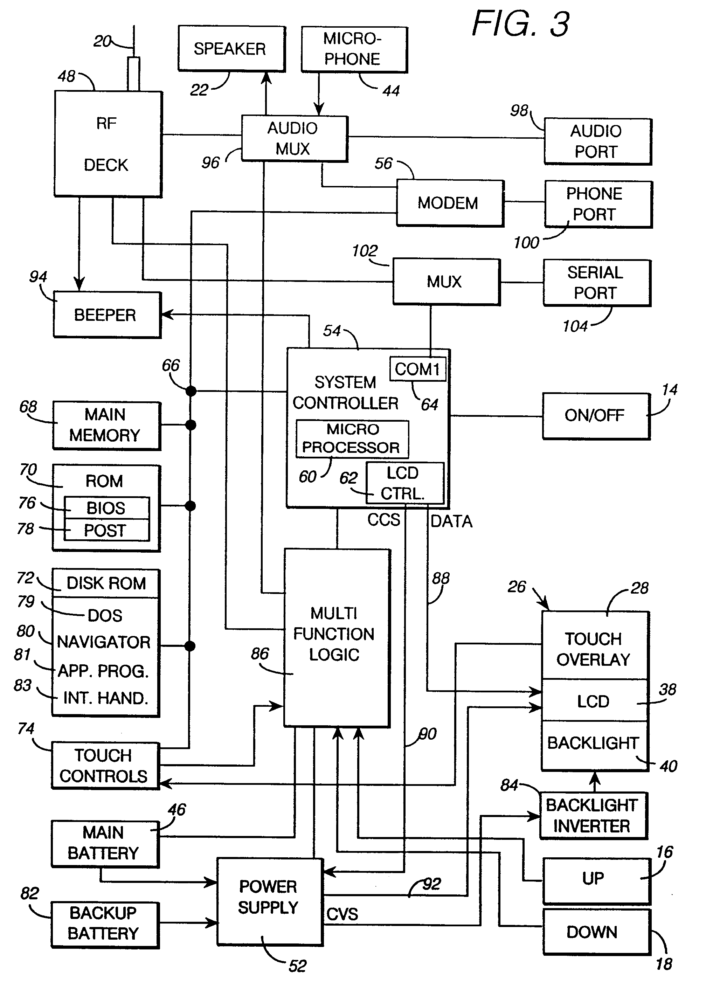

Referring to Fig. 2, PC 10 has a plurality of miniaturized components mounted within casing 12. The components include speaker 22 and microphone 44 spaced apart a distance corresponding to the distance between an ear and the mouth of an average size user to facilitate use as a phone. PC 10 is battery operated and includes a battery 46 detachably mounted on the back wall of the casing. A cellular phone transceiver 48 is mounted inside casing 12 and is connected to antenna 20, the antennal being extensible outwardly from the casing for radio frequency (RF) communications. Display 26 is rectangularly shaped and comprises a touch sensitive overlay 28 that overlies a liquid crystal display (LCD) 38, and a backlight 40. The LCD has a viewing area of 36mm by 115mm and is operated as an all points addressable display. A planar card 50 is mounted within the center of casing 12 and has mounted thereon various components including a power supply 52, a central processing unit (CPU) 54 that forms the system controller (Fig. 3), a modem 56, and other components 58 including a connector for connecting and supporting an optional Personal Computer Memory Card International Association (PCMCIA) card 57 that conforms to published standards of the Association for a version 2.0 card support.

Referring to Fig. 3, system controller 54 is single chip implementation of a PC/XT class portable computer, the chip being a Model VG230 processor commercially available from Vadem, Inc., San Jose, Cal. Controller 54 comprises a plurality of subsystems including a microprocessor 60 for executing various programs stored in the communicator, an LCD controller 62, a COM1 communication port 64, and pinouts for connection to various devices the major ones of which are shown in Fig. 3. A bus 66 interconnects controller 54 with a main memory 68, a read only memory (ROM) 70, a disk ROM 72, touch controls 74, and modem 56.

ROM 70 stores a basic input/output system (BIOS) 76 and a power on self test (POST) program 78, and is accessed in the usual manner. Disk ROM 72, however, is accessed, in a manner that simulates a disk drive, and stores files containing a disk operating system (DOS) 79, the Navigator program 80 which is an extension to the DOS, application programs 81 that produce various communication and data processing functions in PC 10, and interrupt handlers 83 for handling interrupts specific to the applications. Additional memory and application programs can be added by the PCMCIA card. When the communicator is turned on, POST program 78 is executed. In response to a successful completion of the test, a kernel of DOS 79 is then loaded from disk ROM 72 into main memory 68, for execution. DOS 79 accesses disk ROM 72 and loads the Navigator and the application programs, as needed, into main memory 68 for execution by microprocessor 60. The Navigator controls the information displayed on the LCD, paints the various screens associated with the application programs on the LCD, and spawns new programs in response to user selection through actuation of the touchscreen interface.

Communication functions are handled by RF deck 48 and modem 56. RF deck is connected to a beeper 94 that is sounded or actuated to alert the user to an incoming call. Controller 54 is also connected to beeper 94 and is able to selectively actuate the beeper such as when a screen button is selected. Deck 48 is also connected to an audio mux 96 which controls the routing of audio signals between deck 48, speaker 22, microphone 44, modem 56, and an audio port 98. Modem 56 is connected to a phone port 100 by means of which PC 10 can be connected by a cable (not shown) into a phone network or system. Deck 48 is also connected to a mux 102 that in turn is connected further to a serial port 104 and to COM1 port 64 of controller 54.

Battery 46 is connected to power supply 52 and supplies the primary power for operating PC 10. A backup battery 82 is also connected to the power supply and supplies power to volatile memory when the main battery is removed for replacement. Power supply 52 is connected to a backlight inverter 84 that, in turn, is connected to backlight 40 for controlling back lighting of the LCD to allow PC 10 to be operated under low light conditions. PC 10 preferably includes power management functions (not shown) for conserving energy usage and prolonging battery life.

LCD controller 62 is connected by a data bus 88 to supply data to LCD 38 to control the contents of the information displayed by the LCD. Controller 62 drives a contrast control signal (CCS) onto line 90 for transmission to power supply 52. In response to the CCS, power supply 52 drives a contrast voltage signal (CVS) onto line 92 that determines the contrast of LCD 38.

Touch overlay 28 is a resistive pressure sensitive overlay that produces an analog voltage signal indicative of an overlay location being pressed. Overlay 28 is connected to touch controls 74 that convert the analog signal into a digital signal representing the X,Y coordinates of the overlay location being pressed. The digital coordinates are then transmitted over bus 66 to controller 54 and memory 68 for use in determining the purpose of the location being pressed. Touch controls 74 are further connected to multifunction logic 86. In response to sensing that the overlay 28 has been touched, controls 74 generate an interrupt request that is transmitted to logic 86 and logic 86 then transmits the interrupt request to controller 54. UP and DOWN buttons 16 and 18 are also connected to logic 86 which debounces any signals due to the mechanical nature and generates a button number identifying which button has been pressed. The numbers are stored in I/O ports (not shown) which can be polled by the system. Multifunction logic 86 is also connected to RF deck 48 and audio mux 96 allowing controller 54 to communicate therewith and provide functions not done by the system controller, such functions not being germane to the invention.

### Operation

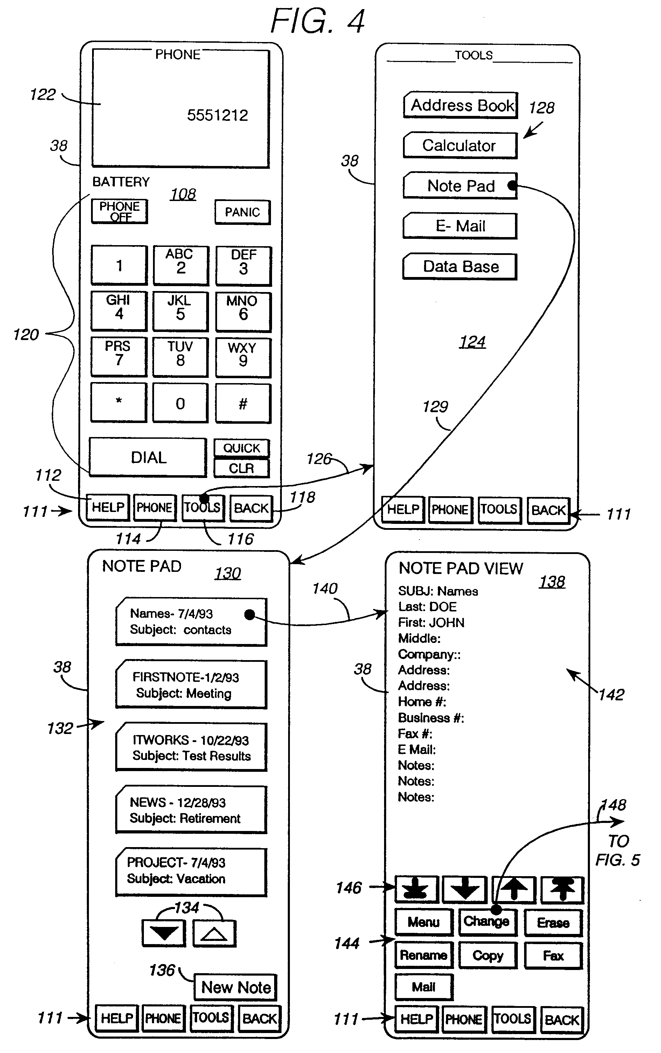

As indicated above, when PC 10 is turned on, DOS 79 and Navigator 80 are loaded into main memory 68, along with an application. By default, the first application to be loaded is a phone application that provides and controls cellular phone operations. Such application is executed and interacts with the Navigator program to create a Phone screen 108 on LCD 38, which screen is shown in Fig. 4. The various screens displayed on LCD 38 are painted by Navigator 80 using information from the specific application program to which the screen is relevant.

The screens include selectable buttons having thin solid lines along their left and top edges and shadow lines along their bottom and right edges. The buttons also bear labels or icons, or both. A button is selected by a touch and release action. That is, a button is selected when the user touches overlay 28 in the area overlaying the button, and then releases the button by releasing the overlay. When a button is so touched, it is highlighted. When a button is so selected, the system sounds beeper 94 to provide audio feedback to the user. All buttons are also operated by a "last contact" method so that a user can easily recover from touching an unintended button by leaving a finger on the screen and sliding to another button or a non-button area. As a finger is slid across the overlay, new buttons are highlighted while the old buttons are returned to normal, non-highlighted conditions, thereby providing the user with visual feedback as to which button will be selected when the finger is removed from the overlay. Each application program contains one or more maps correlating the X,Y positions of the overlay with the different buttons. The Navigator scans the map, in response to receiving X,Y coordinates, to determine the function of a selected area or button, and to take appropriate action.

Screen 108 includes a simulated cellular phone keyboard 120 and a data entry area 122 in which phone numbers are displayed as the respective digits of a phone number are entered by the keyboard. Screen 108 also comprises a row 111 of selectable buttons including a HELP button 112, a PHONE button 114, a TOOLS button 116, and a BACK button 118, located along the bottom edge of the screen. These four selectable buttons are common to other menu screens and appear at the same locations on screen 110 and other portrait screens. PHONE button 114 is used to transfer control to the phone application from other applications, to allow the user to place or receive a phone call regardless of the current application. TOOLS button 116 is used to transfer control to an office tools screen allowing the user to select another application. BACK button 118 is used to transfer control back to the previously selected screen(s).

When TOOLS button 116 of screen 108 is selected, the Navigator then paints a Tools screen 124, where arrow 126 represents switching from Phone screen 108 to Tools screen 124. Tools screen 124 displays a plurality of selectable buttons 128 that allow a user to select an application from a menu of different applications such as an address book, a calculator, a note pad, E-mail, and data base services. When the Note Pad button is selected, the Navigator switches to a Note Pad application via arrow 129, and a Note Pad screen 130 is painted on display 38.

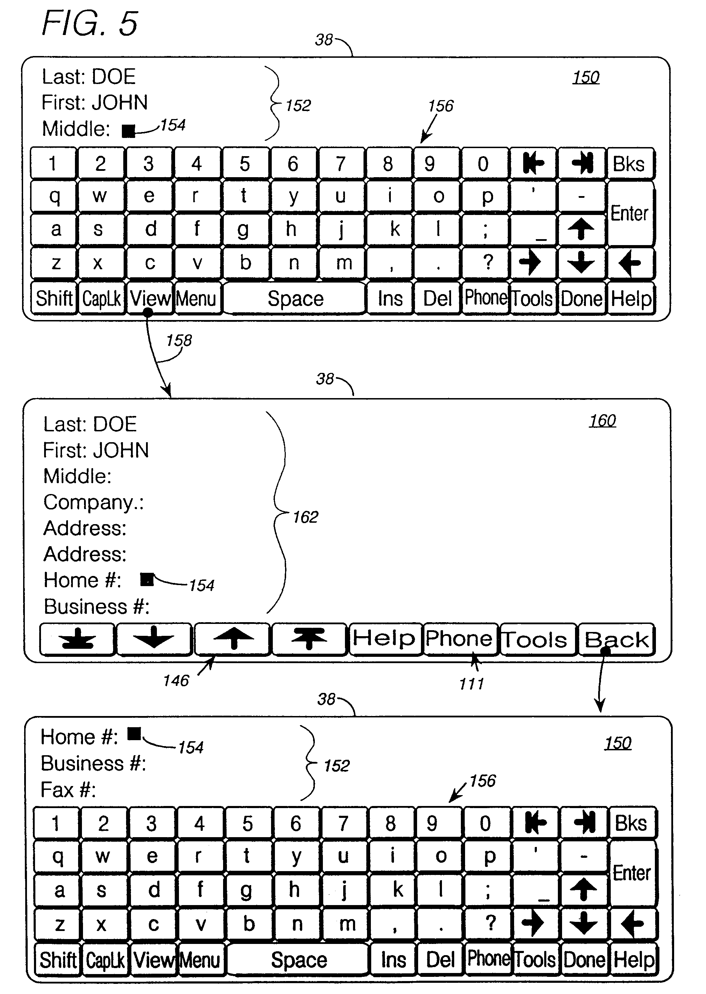

Note Pad screen 130 contains a plurality of selectable buttons 132 that list the names, date, and subject matter of files stored in the system. Two keys 134 permit scrolling of additional note pad files. A New Note key 136 is selectable by the user allowing a new file to be created. In response to selecting one of keys 132, a Note Pad View screen 138 is displayed (arrow 140). Screen 138 contains a label indicating the name of the file selected as the subject to be viewed, and the contents of the first page of the selected file. By way of example, the illustrated screen contains the first page of a "Names". Screen 138 also contains a plurality of buttons which are located below the data display area, the buttons including a row 111 of common screen buttons, three rows of function buttons 144, and a row of page and line scrolling buttons 146. The function buttons 144 includes a CHANGE button which, when selected, invokes an editor that switches via arrow 148, to editor screen 150 of Fig. 5. It should be noted that the screens described above and shown in fig. 4, are oriented in a portrait orientation, while the editor screens of Fig. 5 have landscape orientations.

Referring to Fig. 5, editor screen 150 comprises a size limited, data entry area 152 that can display two to five lines of text dependent on font size. A cursor 154 is located at the point of next character entry. Screen 150 further displays a full keyboard 156 that includes a standard "qwerty" keyboard containing a top row of numerals 1-0 , three rows of alphabetic characters a-z and punctuation characters "'", "-", ";", "-", ",", "." , and "?", and keys for backspacing, entering, and scrolling. A bottom row of keys includes SHIFT, CAPS LOCK, VIEW, MENU, SPACE, INSERT, and DELETE keys, and common screen keys 111. The qwerty keyboard 150 displays a lower case set of characters. Selection of the shift key displays upper case letters along with new characters for the other keys. Selection of the caps lock key displays a set of upper case letters with no change in other keys. The user enters data and selects the functions by touching the screen and then releasing the touch when the desired key or button is highlighted.

It should be noted that editor screen 150 is highly useful and advantageous since it presents to the user a full keyboard for entering data, in a relatively small display. However, since the full keyboard occupies most of the viewable area of the screen, only a limited data entry area is available and the user can see only a portion of larger files. The invention overcomes this difficulty by providing means to expand the area of the data being displayed while collapsing the keyboard. This is done in response to the user selecting the VIEW key, which causes the Navigator to switch via arrow 158 to collapsed keyboard screen 160, in which the data display area 162 is expanded to occupy all of the display area except for one row of keys at the bottom of such area. The display area includes eight lines of text in the illustrated example, but the number of lines depends on font size. The row of keys includes the four common screen keys 111 and four keys 146 for page and line scrolling the data in area 162.

The expanded area 162 allows the user to more rapidly browse through the file and either return to the screen 150 and the data originally displayed therein, or to select new data to be displayed. Thus, in the example, assume that the user wants to enter the home phone number. The user selects the line containing "Home #:" by touching the screen along the line causing a cursor to be inserted in the line either at a space beneath the point of touch or at the first available space to the left. Then, in response to the user selecting the Back button, the Navigator switches back to the full keyboard editor screen 150' with the inserted cursor and selected line being automatically displayed in data entry area 152 for the immediate entry of data at the cursor in response to subsequent actuation of the keyboard.

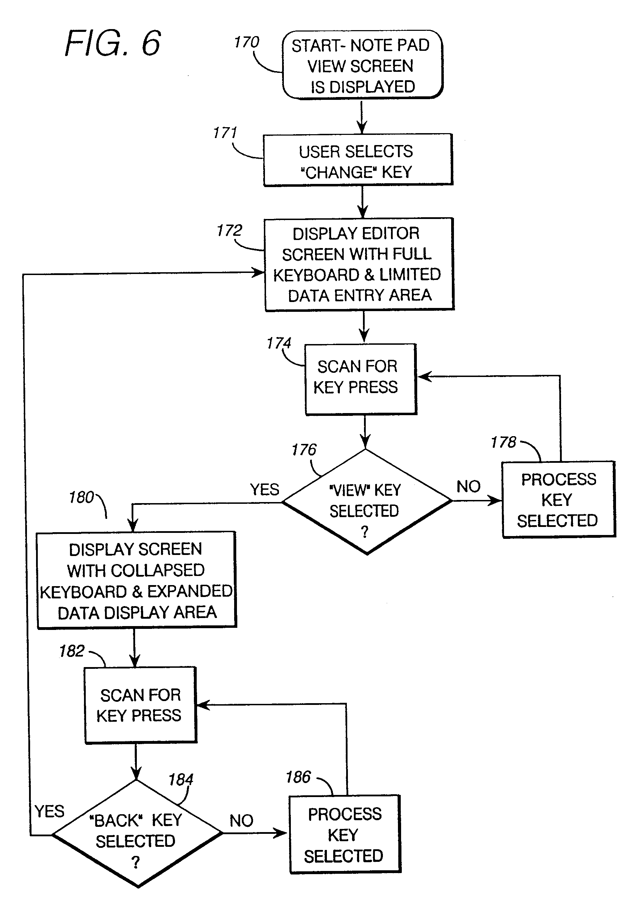

The switching between certain different screens shown in Figs. 4 and 5, is done in the manner shown in Fig. 6. At the start 170, Note Pad screen 138 is being displayed. When the user selects the CHANGE key on screen 138, an interrupt occurs and the Navigator then displays 172 the Editor screen 150, which as described above, includes the full keyboard 156 and the limited data editing area 152. At this point the system then awaits further input from the user, and the system scans 174 for pressing or actuation of a key. When a key is selected, a decision is made in 176 at to whether the selected key is the VIEW key. If the key is not the VIEW key, step 178 then processes the selected key and returns to scanning at 176. If the selected key is the VIEW key, step 180 then displays screen 160 which has the collapsed keyboard and expanded data display area 162. The system then scans 182 for further key selection from the displayed screen. If a key other than the BACK key is selected, step 184 branches to 186 for processing such key and returning to scanning. Using the example discussed above, the user may have touched or selected the line containing the "HOME #:", and the key processing includes inserting cursor 154 on such line. If the BACK key was selected, step 184 then passes control back to step 172 thereby causing the editor screen 150' to be displayed. In switching from screen 160 to screen 150", the selected line of 160 containing the cursor is automatically displayed in the data entry area 152 of screen 150'.

As should be apparent to those skilled in the art, the programs are stored as electrical signals in the different memories. The term "processing means" as used in the claims encompasses not only memories which store the programmed signals but also the different components, including the microprocessor, which operate in response to the programmed signals, to carry out the different processing functions and operations described above.

## Claims

1. A personal communicator (10) comprising:
a casing (12) of a size adapted to be held in the hand of a user;
a touchscreen display (26) mounted on said casing, said touchscreen display forming a user interface for entering information into and outputting information from said communicator, said touchscreen display comprising a pressure sensitive overlay (28) coupled with a display device for displaying different screens of information;
processing means mounted in said casing, said processing means being connected to said touchscreen display for receiving information entered through said overlay and outputting information to said display device, said processing means comprising screen management means (80) for painting different screens on said display device including a first screen (150) and a second screen (160);
said first screen displaying a full qwerty keyboard (156) having a plurality of rows of alphameric keys, a collapsed data entry area (152), and a first set of selectively actuated function keys including a first key for initiating switching from said first screen to said second screen;
said second screen presenting an expanded data display area (162) and a collapsed keyboard having a single row of selectively actuated function keys including a second key for initiating switching from said second screen to said first screen, said expanded data display area being larger than said collapsed data entry area for displaying more information than is displayable in said data entry area; and
said processing means further comprising key selection detecting means for detecting actuation of said first key and said second key and operating said screen management means to switch between said first and second screens in response to actuation of said first and second keys.

2. A personal communicator (10) as claimed in claim 1 wherein:
said casing (12) is elongated and has a speaker (22) mounted adjacent one end and a microphone (44) mounted adjacent another end; and
said touchscreen display (26) has rectangular shape elongated in a direction similar to said casing, said display device being a liquid crystal display (LCD) on which said first (150) and second (160) screens are presented for viewing by the user.

3. A personal communicator (10) as claimed in claim 2 wherein said screen management means (80) selectively paints screens on said LCD in portrait and landscape orientations, said first (150) and second (160) screens having landscape orientations.

4. A personal communicator (10) as claimed in claim 2 wherein each key is selectable by a user first touching said overlay adjacent to such key and then releasing said overlay; and said processing means further comprises means operable in response to releasing said overlay to process such key so selected.

5. A personal communicator (10) as claimed in claim 4 wherein said processing means detects when said overlay is touched and highlights said such key to provide visual feedback to said user indicative of which key is to be selected upon releasing said overlay.

6. A personal communicator (10) as claimed in claim 1 wherein said data entry area of said first screen (150) contains a predetermined number of lines of information, and said data display area of said second screen (160) contains a larger number of lines of information.

7. A personal communicator (10) as claimed in claim 6 wherein said screen management means displays a cursor (154) in said data entry area indicating a point of next data entry, said screen management means is operative to insert a cursor into said data display area of said second screen (160) in response to said user selecting a line in said second screen by touching said overlay adjacent said line so selected.

8. A personal communicator (10) as claimed in claim 7 wherein said screen management means is further operative in response to said key selection means detecting actuation of said second key, to display a first screen (150) that includes said line, and cursor therein, selected from said second screen (160).
